# EUROPEAN PATENT SPECIFICATION

(11) **EP 1 483 220 B1**
(45) Date of publication and mention of the grant of the patent: **12.07.2006**
(21) Application number: 02704921.2
(22) Date of filing: 06.03.2002
(51) Int. Cl.: C04B 28/02, E21B 33/13, C04B 14/24, C04B 18/08, C04B 18/14, C04B 22/12, C04B 24/16

(54) **LIGHTWEIGHT WELL CEMENT COMPOSITIONS AND METHODS**
LEICHTE BOHRLOCHZEMENTZUSAMMENSETZUNGEN UND VERFAHREN
COMPOSITIONS DE CIMENT LEGER POUR PUITS ET PROCEDES ASSOCIES

(43) Date of publication of application: 08.12.2004
(73) Proprietor: HALLIBURTON ENERGY SERVICES, INC., Duncan, Oklahoma 73533 (US); Institut Français du Pétrole, 92852 Rueil Malmaison Cédex (FR)
(72) Inventor: DAO, Bach, NL-2151 KK Niuew-vennep (NL); RAVI, Krishna, M., Kingwood, TX 77345 (US); VIJN, Jan, Pieter, NL-2353 VV Leiderdorp (NL); NOIK, Christine, F-78230 Le Pec (FR); RIVEREAU, Alain, F-92500 Rueil Malmaison (FR)
(74) Representative: Curtis, Philip Anthony
(86) International application number: PCT/GB2002/001024
(87) International publication number: WO 2003/074443

(56) References cited:
- WO-A-00/29351
- WO-A-01/09056
- WO-A-01/87797
- WO-A-97/28097
- WO-A-97/49644
- US-A- 4 880 468
- US-A- 5 149 370
- US-A- 5 571 318
- CHEMICAL ABSTRACTS, vol. 108, no. 22, 30 May 1988 (1988-05-30) Columbus, Ohio, US; abstract no. 191687k, page 316; XP000181445 & JP 63 017246 A (K. KOBAYASHI, ET AL.) 25 January 1988 (1988-01-25)

## Description

The present invention relates to lightweight well cement compositions and methods of cementing subterranean zones penetrated by well bores using the compositions.

In carrying out completion operations in oil, gas and water wells, hydraulic cement compositions are commonly utilized. For example, hydraulic cement compositions are used in primary cementing operations whereby pipe is cemented in the well bore. That is, a hydraulic cement composition is pumped into the annular space between the walls of the well bore and the exterior of a pipe disposed therein. The cement composition is permitted to set in the annular space thereby forming an annular sheath of hardened impermeable cement therein. The objective of the cement sheath is to physically support and position the pipe in the well bore and bond the pipe to the walls of the well bore whereby the undesirable migration of fluids between zones or formations penetrated by the well bore is prevented.

Recently the need for better economics, higher productivity, environment protection and more efficient well operations has brought about new well drilling and completing techniques. Examples of such new techniques include the reduction of the well bore diameter (referred to as a slim hole) and extending the reservoir penetration by drilling small lateral well bores which are completed using small diameter pipe such as coiled tubing to increase the productivity of the reservoir. The performance of primary cementing operations in the smaller annular spaces in the well bores requires improved lightweight cement compositions having low viscosities so that the cement compositions can be accurately placed. In addition, the cement compositions must have good static gel strength, low rheology, high compressive strength, low fluid loss, low permeability, good chemical resistance and a broad operating temperature range. That is, the cement compositions must be suitable for use at temperatures in the range of from about 45°F to 270°F (7.2°C to 132°C).

Thus, there are needs for improved lightweight cement compositions and methods of using the compositions for cementing pipe in well bores.

The present invention provides improved lightweight cement compositions and methods of cementing subterranean zones utilizing the compositions which meet the needs described above and overcome the deficiencies of the prior art. The lightweight cement compositions of the invention are basically comprised of a coarse particulate hydraulic cement; an ultrafine particulate hydraulic cement mixture comprised of slag cement and a Portland or equivalent cement present in an amount in the range of from about 50% to about 150% by weight of the coarse particulate hydraulic cement in the composition; fly ash present in an amount in the range of from about 50% to about 150% by weight of the coarse particulate hydraulic cement in the composition; fumed silica present in an amount in the range of from about 20% to about 60% by weight of the coarse particulate hydraulic cement in the composition; hollow glass spheres present in an amount sufficient to impart a density to the cement composition in the range of from about 9 to about 13 pounds per gallon (1078 kg/m³ to 1558 kg/m³); and water present in an amount sufficient to form a slurry. The cement compositions also preferably include a fluid loss control additive present in an amount in the range of from about 0.2% to about 8% by weight of the coarse particulate hydraulic cement in the composition.

The coarse particulate hydraulic cement has a particle size no greater than about 118 microns and a specific surface area no less than about 2800 square centimeters per gram. The slag cement and Portland or equivalent cement in the ultrafine cement mixture has a particle size no greater than about 30 microns, a mean particle size of 6 microns and a specific surface area no less than about 6000 centimeters per gram.

The methods of the present invention for cementing a subterranean zone penetrated by a well bore are comprised of the following steps. A lightweight cement composition of the invention is prepared comprised of a coarse particulate hydraulic cement, an ultrafine particulate hydraulic cement inixture of slag cement and Portland or equivalent cement, fly ash, fumed silica, hollow glass spheres, sufficient water to form a slurry and optionally, a fluid loss control additive. After preparation, the cement composition is placed in the subterranean zone to be cemented and the cement composition is allowed to set into a hard impermeable mass.

When the subterranean zone to be cemented has a temperature in the range of from about 45°F 2°C) to about 100°F (37·7°C), a cement composition set accelerator is included in the cement composition. When the subterrancan zone has a temperature in the range of from about 100°F (37.7°C) to about 270°F (13.2°C), a set accelerator and a dispersing agent are included in the cement composition. When the subterranean zone has a temperature in the range of from about 230°F (110°C) to about 270°F (132°C), a cement composition set retarder and silica flour are included in the cement composition. The silica flour functions to prevent set cement strength retrogression.

It is, therefore, an object of the present invention to provide improved lightweight well cementing compositions and methods.

Other and further objects, features and advantages of the present invention will be readily apparent to those skilled in the art upon a reading of the description of preferred embodiments which follows.

The present invention provides universal non-foamed lightweight cement compositions and methods of using the compositions for cementing subterranean zones penetrated by well bores. The lightweight cement compositions can be used over a broad temperature range, i.e., from about 45°F (7.2°C) to about 270°F (132°C) at densities in the range of from about 9 to about 13 pounds per gallon (1078 kg/m³ to 1558 kg/m³). The cement compositions have excellent properties including high static gel strengths, low rheologies, low fluid loss, high compressive strength upon setting, low permeability upon setting and resistance to chemical deterioration and failure due to sulfate degradation or the like.

The lightweight cement compositions of this invention are basically comprised of a coarse particulate hydraulic cement; an ultrafine particulate hydraulic cement mixture comprised of slag cement and a Portland or equivalent cement, fly ash, fumed silica, hollow glass spheres, water present in an amount sufficient to form a slurry and optionally, a fluid loss control additive.

The coarse particulate hydraulic cement can be any of a variety of hydraulic cements having a maximum particle size of about 118 microns and a specific surface area of about 2800 square centimeters per gram. Portland cement is generally preferred, and the coarse cement can be, for example, one or more of the various Portland cements designated as API Classes A-H cements. These cements are identified and defined in the API Specification For Materials And Testing For Well Cements, API Specification 10, 5^{th} Edition, dated July 1, 1990 of the American Petroleum Institute. API Portland cements generally have a maximum particle size of about 90 microns and a specific surface of about 3900 square centimeters per gram. When an API Portland cement is utilized as the coarse hydraulic cement in accordance with this invention, it is preferably AP1 Class G cement. Other hydraulic cements which arc more coarse than API Portland cement can also be used up to the maximum particle size set forth above. When more coarse cements are used, they preferably have properties which are the same or similar as API Class G cement.

The ultrafine particulate hydraulic cement mixture comprised of slag cement and a Portland or equivalent cement has a particle size no greater than about 30 microns, a mean particle size of 6 microns and a specific surface area no less than about 6,000 centimeters per gram. Preferably the ultrafine particulate hydraulic cement mixture has a particle size no greater than about 17 microns and a specific surface area no less than about 7,000 centimeters per gram, and more preferably, a particle size no greater than about I 1 microns and a specific surface area no less than about 10,000 centimeters per gram. Ultrafine particulate hydraulic cement mixtures of slag cement and Portland or equivalent cement having particle sizes and specific surface areas as described above are disclosed in U.S. Patent No. 4,761,183 issued on August 2, 1988 to Clarke. The preferred ultrafine cement mixture for use in accordance with this invention is comprised of slag cement and Portland or equivalent cement wherein the slag cement is present in the mixture in an amount of at least about 50% by weight of the mixture. The slag cement is more preferably included in the ultrafine cement mixture in an amount of about 65% by weight of the mixture and most preferably in an amount of about 75% by weight of the mixture.

The ultrafine particulate hydraulic cement mixture as described above in combination with the coarse particulate hydraulic cement provides high compressive strengths to the set cement compositions of this invention. The ultrafine particulate hydraulic cement mixture is included in the lightweight cement composition of this invention in an amount in the range of from about 50% to about 150% by weight of the coarse particulate hydraulic cement in the composition.

The fly ash utilized in the lightweight cement compositions of this invention is preferably ASTM Class F fly ash. The fly ash functions as a lightweight filler in the cement compositions and in combination with the coarse particulate hydraulic cement provides low permeability to the cement compositions upon setting. The fly ash is included in the cement compositions in an amount in the range of from about 50% to about 150% by weight of the coarse particulate hydraulic cement in the composition.

The fumed silica provides thickening and thixotropic properties to the cement compositions. The fumed silica is included in the cement compositions in an amount in the range of from about 20% to about 60% by weight of the coarse particulate hydraulic cement therein.

The hollow glass spheres are included in the cement compositions of this invention to make them lightweight, i.e., to provide low densities to the compositions. Particularly suitable such hollow glass spheres are commercially available from Halliburton Energy Services, Inc. of Duncan, Oklahoma, under the trade designation "SILICALITE^{™}." The hollow glass spheres are included in the cement compositions of this invention in an amount in the range of from about 21% to about 310% by weight of the coarse particulate hydraulic cement therein to provide densities to the cement compositions in the range of from about 9 to about 13 pounds per gallon (1078 kg/m³ to 1558 kg/m³).

The water in the cement compositions of this invention can be fresh water, unsaturated salt solutions or saturated salt solutions including brine and seawater. The water is included in the cement composition in an amount sufficient to form a pumpable slurry, i.e., an amount in the range of from about 128% to about 400% by weight of the coarse particulate hydraulic cement in the compositions.

The cement compositions of this invention also preferably include a fluid loss control additive. While a variety of fluid loss control additives can be utilized, a preferred fluid loss control additive is comprised of a mixture of a graft copolymer having a backbone of lignin, lignite or salts thereof and a grafted pendant group of 2-acrylamido-2-methylpropanesulfonic acid and a copolymer or copolymer salt of N,N-dimethylacrylamide and 2-acrylamido-2-methyl propane sulfonic acid. The above described graft copolymer is disclosed in U.S. Patent No. 4,676,317 issued to Fry et al. on June 30, 1987 and the above described copolymer or copolymer salt is disclosed in U.S. Patent No. 4,555,269 issued to Rao et al. on November 26, 1985. The mixture of the above fluid loss control additives provides a synergistic increase in fluid loss control and brings about less settling and less free water. When used, the fluid loss control additive is included in the cement compositions of this invention in an amount in the range of from about 0.2% to about 8% by weight of the coarse particulate hydraulic cement in the compositions.

As mentioned, the lightweight cement compositions of this invention can be utilized over a broad temperature range of from about 45°F (7.2°C) to about 270°F (132°C). The density of the cement compositions can be varied by varying the amounts of the hollow glass spheres included in the compositions. That is, the lightweight compositions of this invention can have a density from about 9 to about 13 pounds per gallon (1078 kg/m³ to 1558 kg/m³). The ability to vary the density is important in cementing subterranean zones in that low density cement compositions often must be used to prevent fracturing of the subterranean zones and lost circulation from taking place. The cement compositions of this invention have low rheologies whereby when required they can be pumped at turbulent flow. Pumping the cement composition at turbulent flow aids in displacing drilling fluid from the well bore. The low rheology of the cement composition also produces low friction pressure when the composition is pumped which lowers the risk of fracturing easily fractured zones or formations. When the cement compositions of this invention are utilized in the above mentioned slim hole completions, low rheology is particularly important in preventing fracturing of weak subterranean zones or formations.

When the cement composition of this invention is used in low temperature applications, i.e., applications where the zone being cemented has a temperature in the range of from about 45°F (7.2°C) to about 100°F (37.7°C), a cement composition set accelerator and a cement composition dispersing agent are preferably included in the composition. As will be understood by those skilled in the art, the set accelerator shortens the time required for the cement composition to set at the low temperatures involved and the dispersing agent lowers the rheology of the cement composition.

While a variety of cement composition set accelerators can be utilized, calcium chloride is presently preferred. When used, the set accelerator is included in the cement composition in an amount in the range of from about 1% to about 12% by weight of the coarse particulate hydraulic cement therein.

A variety of dispersing agents can also be utilized in accordance with this invention. A particularly suitable such dispersing agent is the condensation product of acetone, formaldehyde and sodium sulfite. Such a dispersing agent is commercially available from Halliburton Energy Services, Inc. of Duncan, Oklahoma, under the tradename "CFR-3^{™}." The dispersing agent utilized is included in the cement composition in an amount in the range of from about 0.2% to about 8% by weight of the coarse particulate hydraulic cement in the composition.

When the temperature of the subterranean zone to be cemented is in the range of from about 100°F (37.7°C) to about 230°F (110°C), the above described cement composition set accelerator is preferably included therein.

When the subterranean zone or formation to be cemented has a temperature in the range of from about 230°F (110°C) to about 270°F (132°C), the above described cement composition preferably includes a cement composition set retarder and silica flour to prevent set cement strength retrogression. While various set retarders can be utilized, the set retarder used in accordance with this invention is preferably a copolymer of 2-acrylamido-2-methylpropanesulfonic acid and acrylic acid at temperatures up to 250°F (121°C) or a copolymer of 2-acrylamdio-2-methylpropane sulfonic acid and itaconic acid at temperatures above 250°F (121°C). Such set retarders are commercially available under the trade designations "SCR-100^{™}" and "SCR-500^{™}," respectively, from Halliburton Energy Services, Inc. of Duncan, Oklahoma. The set retarder functions to delay the set of the cement composition until it has been placed in the subterranean zone to be cemented. The amount of set retarder utilized increases with increasing temperature and is generally included in the cement compositions of this invention in an amount in the range of from about 0.2% to about 8% by weight of the coarse particulate hydraulic cement in the compositions.

As indicated above, silica flour is included in the cement compositions to prevent the compressive strength of the set cement from decreasing over time due to the high temperature of the subterranean zone in which it is placed. When used, the silica flour is included in the cement compositions in an amount in the range of from about 20% to about 60% by weight of the coarse particulate hydraulic cement in the compositions.

In order to prevent the chemical degradation of the set cement composition of this invention, the coarse particulate hydraulic cement utilized can optionally be an API Class G Portland cement which does not contain tricalcium aluminate. The presence of tricalcium aluminate in the cement can cause sulfate degradation of the cement.

A particularly suitable lightweight cement composition of this invention is comprised of a coarse particulate API Class G Portland cement having a particle size no greater than about 118 microns and a specific surface area no less than about 2800 square centimeters per gram; an ultrafine particulate hydraulic cement mixture comprised of slag cement and a Portland or equivalent cement, the cement mixture having a particle size no greater than about 30 microns and a specific surface area no less than about 6,000 centimeters per gram and being present in an amount in the range of from about 50% to about 150% by weight of the coarse particulate hydraulic cement in the composition; ASTM Class F fly ash or the equivalent present in an amount in the range of from about 50% to about 150% by weight of the coarse particulate hydraulic cement in the composition; fumed silica present in an amount in the range of from about 20% to about 60% by weight of the coarse particulate hydraulic cement in the composition; hollow glass spheres present in an amount sufficient to impart a density to the cement composition in the range of from about 9 to about 13 pounds per gallon (1078 kg/m³ to 1558 kg/m³); and water present in an amount sufficient to form a slurry.

The water in the composition can be selected from the group consisting of fresh water, saturated salt solutions and unsaturated salt solutions including brine and seawater, and the water can be present in a general amount in the range of from about 128% to about 400% by weight of the coarse particulate hydraulic cement in the composition.

As indicated above, the composition preferably also includes a fluid loss control additive comprised of a mixture of the graft copolymer (Halliburton "SCR-100^{™}") and the copolymer or copolymer salt (Halliburton "SCR-500^{™}") described above in an amount in the range of from about 0.2% to about 8% by weight of the coarse particulate hydraulic cement in the composition.

Further, as also described above, depending on the temperature of the subterranean zone to be cemented, one or more additional additives are preferably included in the cement compositions of this invention. The additives include, but are not limited to, a cement composition set accelerator, a cement composition dispersing agent, a cement composition set retarder and silica flour for preventing set cement strength retrogression at elevated temperatures.

The methods of cementing a subterranean zone penetrated by a well bore in accordance with the present invention are basically comprised of the following steps. A lightweight cement composition of this invention basically comprised of a coarse particulate hydraulic cement, an ultrafine particulate hydraulic cement mixture of slag cement and a Portland or equivalent cement, fly ash, fumed silica, hollow glass spheres and sufficient water to form a slurry is prepared. Thereafter, the cement composition is placed in the subterranean zone to be cemented and the cement composition is allowed to set into a hard impermeable mass.

In order to further illustrate the lightweight cement compositions and methods of the present invention, the following examples are given.

### Example 1

A lightweight cement composition of the present invention was prepared comprising coarse particulate API Class G Portland cement (Dyckerhoff), an ultrafine particulate hydraulic cement mixture comprised of 75% by weight slag cement and 25% by weight of Portland or equivalent cement, ASTM Class F fly ash, fumed silica, hollow glass spheres, fresh water and a mixture of two fluid loss control agents, i.e., a graft polymer of lignin, lignite or their salts and a grafted pendant group comprised of 2-acrylamido-2-methylpropane sulfonic acid and a copolymer or copolymer salt of N,N-dimethylacrylamide and 2-acrylamido-2-methylpropane sulfonic acid. Test samples of the cement compositions were tested for density, thickening time, rheology, zero gel time and transition time in accordance with the procedures set forth in the above mentioned API Specification 10. In addition, the compressive strength of the cement composition after setting was determined. All of the above listed tests were performed at 45°F (7.2°C). The amounts of the components of the test cement composition as well as the test results are given in Table I below.

**TABLE I Cement Composition Properties At 45°F**

| Test Composition Components | Quantity, % by wt. of Coarse Cement | Density, lb/gal (x 120 kg/m³) | Thickening Time To 100 Bc at 45°F (7·2°C), Hrs:min | Rheology | Compressive Strength¹ | | | Zero Gel Time, Hrs:min | Transition Transition Time, Hrs:min |
|---|---|---|---|---|---|---|---|---|---|
| | | | | 300-200-100-60-30-6-3 | Time To 50 psi (345 kPa), Hrs:min | Time To After 500 psi (3447 kPa), Hrs:min | After 66 Hrs, psi | | |
| Portland Class | | | | | | | | | |
| G coarse cement² | | | | | | | | | |
| Ultrafine Cement³ | 100 | | | | | | | | |
| Fly Ash⁴ | 100 | | | | | | | | |
| Fumed Silica | 40 | | | | | | | | |
| Hollow Glass Spheres | 60 | 12.5 | 7:54 | 205-143-57-61-57-12-8 | 14:18 | 36:57 | 976 | 4:01 | 0:46 |
| Water | 161 | | | | | | | | |
| CaCl₂ | 9.6 | | | | | | | | |
| Fluid Loss | 3.6 | | | | | | | | |
| Control Additive⁵ | | | | | | | | | |
| Dispersant⁶ | 0.6 | | | | | | | | |

| | | | | | | | | | |
|---|---|---|---|---|---|---|---|---|---|
| ¹ Ultrasonic Cement Analyzer | | | | | | | | | |
| ² Dyckerhoff cement | | | | | | | | | |
| ³ 75% slag cement - 25% Portland cement | | | | | | | | | |
| ⁴ ASTM Class F fly ash | | | | | | | | | |
| ⁵ Mixture of graft copolymer (U.S. Pat. 4,676,317) and copolymer or copolymer salt (U.S. Pat. 4,555,269) | | | | | | | | | |
| ⁶ Condensation product of acetone, formaldehyde and sodium sulfite | | | | | | | | | |

From Table I, it can be seen that the cement composition of this invention had excellent properties at 45°F (7.2°C).

### Example 2

A lightweight cement composition of this invention was prepared comprised of a coarse particulate API Class G Portland cement (Dyckerhoff), an ultrafine particulate hydraulic cement mixture comprised of slag cement and a Portland or equivalent cement, ASTM Class F fly ash, fumed silica, hollow glass spheres, fresh water, a cement set accelerator comprised of calcium chloride and a mixture of two fluid loss control additives, i.e., a graft polymer comprised of lignin, lignite or their salts and a grafted pendant group comprising 2-acrylamido-2-methylpropane sulfonic acid and a copolymer or copolymer salt of N,N-dimethylacrylamide and 2-acrylamido-2-methylpropane sulfonic acid. Test portions of the cement composition were tested for density, thickening time, rheology, fluid loss, and free water in accordance with the procedures set forth in the above mentioned API Specification 10. In addition, the compressive strength of the cement composition was determined. All of the above mentioned tests were determined at 100°F (37.7°C). The amounts of the various components in the cement composition tested as well as the test results are set forth in Table II below.

**TABLE II Cement Composition Properties At 100°F**

| Test Composition Components | Quantity, % by wt, of Coarse Cement | Density, lb/gal (x120 kg/m³) | Thickening Time To | | Rheology | Fluid Loss, cc/30 min | Free Water, % | Spec. Gravity, top/ bottom | Compressive Strength,¹ | | | |
|---|---|---|---|---|---|---|---|---|---|---|---|---|
| | | | 70 Bc, Hrs:min | 100 Bc, Hrs:min | 300-200-100-60-30-6-3 | | | | Time to 50 psi (345 kPa) Hrs:min | Time 500 psi (3447 kPa), Hrs:min | to After 24 Hrs | Final, psi (x 6895 Pa) hrs |
| Portland Class G Coarsc Cement² | | | | | | | | | | | | |
| Ultrafine Cement³ | 100 | | | | | | | | | | | |
| Fly Ash⁴ | 100 | | | | | | | | | | | |
| Fumed Silica | 40 | 11.66 | 2:55 | 2:56 | 56-41-23-14-8-3-2.5 | 44 | 0 | 1.331/1.561 | 7:34 | 10:53 | 1816 | 2839/68 |
| Hollow Glass | 60 | | | | | | | | | | | |
| Spheres | | | | | | | | | | | | |
| Water | 262 | | | | | | | | | | | |
| CaCl₂ | 12 | | | | | | | | | | | |
| Fluid Loss Control Additive⁵ | 3.6 | | | | | | | | | | | |

| | | | | | | | | | | | | |
|---|---|---|---|---|---|---|---|---|---|---|---|---|
| ¹ Ultrasonic Cement Analyzer | | | | | | | | | | | | |
| ² Dyckerhoff cement | | | | | | | | | | | | |
| ³ 75% slag cement - 25% Portland cement | | | | | | | | | | | | |
| ⁴ ASTM Class F fly ash | | | | | | | | | | | | |
| ⁵ Mixture of graft copolymer (U.S. Pat. 4,676,317) and copolymer or copolymer salt (U.S. Pat. 4,555,269) | | | | | | | | | | | | |
| ⁶ Condensation product of acetone, formaldehyde and sodium sulfite | | | | | | | | | | | | |

From Table II it can be seen that the tested cement composition of this invention had excellent properties at 100°F (37.7°C).

### Example 3

Five test cement compositions of the present invention were prepared containing various amounts of a coarse particulate API Class G Portland cement (Dyckerhoff), an ultrafine particulate hydraulic cement mixture comprised of slag cement and a Portland or equivalent cement, fly ash, fumed silica, hollow glass spheres, fresh water, silica flour, a mixture of two fluid loss control additives, i.e., a graft polymer comprised of lignin, lignite or their salts and a grafted pendant group comprised of 2-acrylamido-2-methylpropane sulfonic acid and a copolymer of N,N-dimethylacrylamide and 2-acrylamido-2-methylpropane sulfonic acid; and a set retarder selected from a copolymer of 2-acrylamido-2-methylpropane sulfonic acid and acrylic acid or a copolymer of 2-acrylamido-2-methylpropane sulfonic acid and itaconic acid. Test samples of each composition were tested for density, thickening time, rheology, fluid loss and free water in accordance with the procedure set forth in the above mentioned API Specification 10. The compressive strengths of set portions of the cement compositions were also determined. All of the tests were run at temperatures in the range of from 200°F to 270°F (93.3°C to 132°C). The amounts of the test cement composition components and the test results are set forth in Table III below.

**TABLE III Cement Composition Properties At 200°F To 270°F (93.3°C to 132°C)**

| Test Composition No. | 1 | 2 | 3 | 4 | 5 |
|---|---|---|---|---|---|
| Test Composition Components, % by wt. Coarse Cement | | | | | |
| Portland Glass G Coarse Cement² | | | | | |
| Ultrafine Cement³ | 100 | 100 | 100 | 100 | 100 |
| Fly Ash⁴ | 100 | 100 | 100 | 100 | 100 |
| Fumed Silica | 40 | 40 | 40 | 40 | 40 |
| Hollow Glass Spheres | 60 | 60 | 60 | 60 | 60 |
| Water | 264 | 264 | 264 | 264 | 264 |
| Fluid Loss Control Additive⁵ | 6.10 | 6.10 | 6.10 | 5.10 | 5.10 |
| Set Retarder⁶ | 1.32 | 2.2 | 2.2 | 0 | 0 |
| Set Retarder⁷ | 0 | 0 | 0 | 2.34 | 2.34 |
| Silica Flour⁸ | 0 | 0 | 0 | 0 | 0 |
| Density, lb/gal (x120kg/m³) | 11.66 | 11.66 | 11.66 | 11.66 | 11.66 |
| Thickening Time To; | | | | | |
| Temperature, °F (°C) | 200 (93.3) | 240 (116) | 260 (127) | 270 (132) | 270 (132) |
| 70 Bc, Hrs:min | 3:30 | 5:37 | 4:04 | 3:22 | 3:10 |
| 100 Bc, Hrs:min | 3:32 | 5:40 | 4:04 | 3:23 | 3:11 |
| Rheology at 195°F (90.6°C) | | | | | |
| 300 | 175 | 93 | 80 | 120 | 70 |
| 200 | 112 | 52 | 49 | 78 | 45 |
| 100 | 63 | 26 | 27 | 40 | 24 |
| 60 | 42 | 17 | 17 | 26 | 15 |
| 30 | 25 | 9 | 9 | 15 | 7 |
| 6 | 8 | 3 | 3 | 4 | 1 |
| 3 | 6 | 2 | 2 | 3 | 1 |
| Fluid Loss at 195°F (90.6°C) | | | | | |
| cc/30 min | 34 | 34 | 36 | 36 | 51 |
| Free Water,% | 0 | 0 | 0 | 0 | 0 |
| Compressive Strength¹ | | | | | |
| Temperature, °F (°C) | 200 (93.3) | 240 (116) | 260 (127) | 270 (132) | 270 (132) |
| Time to 50 psi (345 kPa), Hrs:min | 7:09 | 6:50 | 4:45 | 2:41 - | |
| Time to 500 psi (3447 kPa), Hrs:min | 8:13 | 9:21 | 6:16 | 6:43 | 8:32 |
| After 24 hours, psi (x 6895 Pa) | 2400 | 1200 | 1531 | 700 | 1105 |
| psi (x 6895 Pa) days | 2639/90 | 1465/2 | 1534/2 | 1877/84 | 1556/4 |
| psi (x 6895 Pa) days | - | - | 1901/- | 1600/112 | 1850/120 |

| | | | | | |
|---|---|---|---|---|---|
| ¹ Ultnsonic Cement Analyzer | | | | | |
| ² Dyckerhoff cement | | | | | |
| ³ 75% slag - 25% Portland cement | | | | | |
| ⁴ ASTM Class F fly ash | | | | | |
| ⁵ Mixture of graft copolymer (U.S. Pat. 4,676,317) and copolymer or copolymer salt (U.S. Pat. 4,555,269) | | | | | |
| ⁶ Copolymer of 2-acrylamido-2-methylpropanesulfonic acid and acrylic acid. | | | | | |
| ⁷ Copolymer of 2-acrylamido-2-methylpropanesulfonic acid and itaconic acid. | | | | | |
| ⁸ "inventic set cement compressive strength retrogression. | | | | | |

From Table III, it can be seen that the lightweight cement compositions of the present invention have excellent properties at temperatures in the range of from 200°F to 275°F (93.3°C to 132°C).

Thus, the present invention is well adapted to carry out the objects and attain the ends and advantages mentioned as well as those which are inherent therein. It will be appreciated that the invention may be modified within the scope of the appended claims.

## Claims

1. A lightweight cement composition for cementing a subterranean zone penetrated by a well bore comprising: a coarse particulate hydraulic cement; an ultrafine particulate hydraulic cement mixture comprised of slag cement and a Portland or equivalent cement present in an amount in the range of from 50% to 150% by weight of said coarse particulate hydraulic cement in said composition; fly ash present in an amount in the range of from 50% to 150% by weight of said coarse particulate hydraulic cement in said composition; fumed silica present in an amount in the range of from 20% to 60% by weight of said coarse particulate hydraulic cement in said composition; hollow glass spheres present in an amount sufficient to impart a density to said cement composition in the range of from 9 to 13 pounds per gallon (1078 to 1558 kg/m³); and water present in an amount sufficient to form a slurry.

2. A composition according to claim 1, wherein said coarse particulate hydraulic cement has a particle size no greater than 118 microns and a specific surface area no less than 0.28 m² per gram.

3. A composition according to claim 1 or 2, wherein said coarse particulate hydraulic cement is API Class G Portland or the equivalent cement.

4. A composition according to claim 1, 2 or 3, wherein said slag cement in said ultrafine cement mixture has a particle size no greater than 30 microns, a mean particle size of 6 microns and a specific surface area no less than 0.6 m² per gram.

5. A composition according to any one of claims 1 to 4, wherein said Portland or equivalent cement in said ultrafine cement mixture has a particle size no greater than 30 microns, a mean particle size of 6 microns and a specific surface area no less than 0.6 m² per gram.

6. A composition according to any one of claims 1 to 5, wherein said slag cement in said ultrafine cement mixture is present in said mixture in an amount of at least 50% by weight of said mixture.

7. A composition according to any one of claims 1 to 6, wherein said fly ash is ASTM Class F fly ash.

8. A composition according to any one of claims 1 to 7, wherein said hollow glass spheres are present in an amount in the range of from 21% to 310% by weight of said coarse particulate hydraulic cement in said composition.

9. A composition according to any one of claims 1 to 8, wherein said water is selected from the group consisting of fresh water, saturated salt solutions and unsaturated salt solutions.

10. A composition according to claim 9, wherein said water is present in an amount in the range of from 128% to 400% by weight of said coarse particulate hydraulic cement in said composition.

11. A composition according to any one of claims 1 to 10, wherein said composition further comprises a fluid loss control additive.

12. A composition according to claim 11, wherein said fluid loss control additive is a mixture of a graft copolymer comprised of a backbone of lignin, lignite or salts thereof and a grafted pendant group of 2-acrylamido-2-methylpropanesulfonic acid and a copolymer or copolymer salt of N,N-dimethylacrylamide and 2-acrylamido-2-methylpropanesulfonic acid.

13. A composition according to claim 11 or 12, wherein said fluid loss control additive is present in an amount in the range of from 0.2% to 8% by weight of said coarse particulate hydraulic cement in said composition.

14. A composition according to any one of claims 1 to 13, which further comprises a cement composition set accelerator.

15. A composition according to claim 14, wherein said cement composition set accelerator is comprised of calcium chloride and is present in an amount in the range of from 0.2% to 12% by weight of said coarse particulate hydraulic cement in said composition.

16. A composition according to any one of claims 1 to 15, which further comprises a cement composition dispersing agent.

17. A composition according to claim 16, wherein said cement composition dispersing agent is the condensation product of acetone, formaldehyde and sodium sulfite and is present in an amount in the range of from 0.2% to 8% by weight of said coarse particulate hydraulic cement in said composition.

18. A composition according to any one of claims 1 to 17, which further comprises a cement composition set retarder.

19. A composition according to claim 18, wherein said cement composition set retarder is selected from the group consisting of a copolymer of 2-acrylamido-2-methylpropane sulfonic acid and acrylic acid and a copolymer of 2-acrylamido-2-methylpropane sulfonic acid and itaconic acid and is present in an amount in the range of from 0.2% to 8% by weight of said coarse particulate hydraulic cement in said composition.

20. A composition according to any one of claims 1 to 19, which further comprises silica flour to prevent set cement strength retrogression at elevated temperatures present in an amount in the range of from 20% to 60% by weight of said coarse particulate hydraulic cement in said composition.

21. A method of cementing a subterranean zone penetrated by a well bore comprising the steps of: (a) preparing a lightweight cement composition comprised of a coarse particulate hydraulic cement, an ultrafine particulate hydraulic cement mixture of slag cement and a Portland or equivalent cement, fly ash, fumed silica, hollow glass spheres and sufficient water to form a slurry; (b) placing said cement composition in said subterranean zone; and (c) allowing said cement composition to set into a hard impermeable mass.

22. A method according to claim 21, wherein said coarse particulate hydraulic cement has a particle size no greater than 118 microns and a specific surface area no less than 2800 square centimetres per gram.

23. A method according to claim 21 or 22, wherein said coarse particulate hydraulic cement is API Class G Portland or the equivalent cement.

24. A method according to claim 21, 22 or 23, wherein said slag cement in said ultrafine cement mixture has a particle size no greater than 30 microns, a mean particle size of 6 microns and a specific surface area no less than 6000 centimetres per gram.

25. A method according to any of claims 21 to 24, wherein said Portland or equivalent cement in said ultrafine cement mixture has a particle size no greater than 30 microns, a mean particle size of 6 microns and a specific surface area no less than 6000 centimetres per gram.

26. A method according to any of claims 21 to 25, wherein said slag cement in said ultrafine cement mixture is present in said mixture in an amount of at least 50% by weight of said mixture.

27. A method according to any of claims 21 to 26, wherein said fly ash is ASTM Class F fly ash.

28. A method according to any of claims 21 to 27, wherein said ultrafine cement mixture of slag cement and a Portland or equivalent cement is present in said cement composition in an amount in the range of from 50% to 150% by weight of said coarse particulate hydraulic cement therein.

29. A method according to any of claims 21 to 28, wherein said fly ash is ASTM Class F fly ash.

30. A method according to any of claims 21 to 29, wherein said fumed silica is present in said composition in an amount in the range of from 20% to 60% by weight of said coarse particulate hydraulic cement therein.

31. A method according to any of claims 21 to 30, wherein said hollow glass spheres are present in said composition in an amount in the range of from 21 % to 310% by weight of said coarse particulate hydraulic cement therein.

32. A method according to any of claims 21 to 31, wherein said water is selected from the group consisting of fresh water, saturated salt solutions and unsaturated salt solutions.

33. A method according to claim 32, wherein said water is present in said composition in an amount in the range of from 128% to 400% by weight of said coarse particulate hydraulic cement therein.

34. A method according to any of claims 21 to 33, wherein said composition further comprises a fluid loss control additive.

35. A composition according to any of claims 21 to 34, wherein said fluid loss control additive is a mixture of a graft copolymer comprised of a backbone of lignin, lignite or salts thereof and a grafted pendant group of 2-acrylamido-2-methylpropanesulfonic acid and a copolymer or copolymer salt of N,N-dimethylacrylamide and 2-acrylamido-2-methylpropanesulfonic acid.

36. A composition according to claim 34 or 35, wherein said fluid loss control additive is present in said composition in an amount in the range of from 0.2% to 8% by weight of said coarse particulate hydraulic cement in said composition.

37. A method according to any of claims 21 to 36, wherein said subterranean zone has a temperature in the range of from 45°F to 100°F (7.22°C to 37.8°C) and said cement composition further comprises a cement composition set accelerator and a cement composition dispersing agent.

38. A method according to claim 37, wherein said cement composition set accelerator is calcium chloride and is present in said composition in an amount in the range of from 0.2% to 12% by weight of said coarse particulate hydraulic cement therein.

39. A method according to claim 37 or 38, wherein said cement composition dispersing agent is the condensation product of acetone, formaldehyde and sodium sulfite and is present in said composition in an amount in the range of from 0.2% to 8% by weight of said coarse particulate hydraulic cement therein.

40. A method according to any of claims 21 to 36, wherein said subterranean zone has a temperature in the range of from 100°F to 230°F (37.8°C to 110°C) and said cement composition further comprises a cement composition set accelerator.

41. A method according to claim 40, wherein said cement composition set accelerator is calcium chloride and is present in said composition in an amount in the range of from 0.2% to 12% by weight of said coarse particulate hydraulic cement composition.

42. A method according to any of claims 21 to 36, wherein said subterranean zone has a temperature in the range of from 230°F to 270°F (110°C to 132°C) and said cement composition further comprises a cement composition set retarder and silica flour to prevent set cement strength retrogression.

43. A method according to claim 42, wherein said cement composition set retarder is selected from the group consisting of a copolymer of 2-acrylamido-2-methylpropane sulfonic acid and acrylic acid and a copolymer of 2-acrylamido-2-methylpropane sulfonic acid and itaconic acid and is present in said composition in an amount in the range of from 0.2% to 8% by weight of said coarse particulate hydraulic cement therein.

44. A method according to claim 42 or 43, wherein said silica flour is present in said composition in an amount in the range of from 20% to 60% by weight of said coarse particulate hydraulic cement therein.

## Patentansprüche

1. Eine leichte Zementzusammensetzung für das Zementieren einer Untergrundzone, welche von einem Bohrloch penetriert wird, umfassend: einen groben, aus Feststoffen bestehenden hydraulischen Zement; eine ultrafeine, aus Feststoffen bestehende hydraulische Zementmischung, umfassend Schlackezement und einen Portland- oder gleichwertigen Zement, welcher in einer Menge innerhalb eines Bereichs von 50% bis 150% Massenanteil des genannten groben, aus Feststoffen bestehenden hydraulischen Zements in der genannten Zusammensetzung vorhanden ist; Flugasche, welche in einer Menge innerhalb eines Bereichs von 50% bis 150% Massenanteil des genannten groben, aus Feststoffen bestehenden hydraulischen Zements in der genannten Zusammensetzung vorhanden ist; abgerauchte Silika, welche in einer Menge innerhalb eines Bereichs von 20% bis 60% Massenanteil des genannten groben, aus Feststoffen bestehenden hydraulischen Zements in der genannten Zusammensetzung vorhanden ist; hohle Glaskugeln, welche in einer ausreichend großen Menge vorhanden sind, um der genannten Zementzusammensetzung eine Dichte innerhalb eines Bereichs von 9 bis 13 Pfund pro Gallone (1078 bis 1558 kg/m³) zu verleihen; und Wasser, welches in einer ausreichend großen Menge vorhanden ist, um einen Schlamm zu formen.

2. Eine Zusammensetzung nach Anspruch 1, worin der genannte grobe, aus Feststoffen bestehende hydraulische Zement eine Partikelgröße von nicht mehr als 118 Mikron und einen spezifischen Oberflächenbereich von nicht weniger als 0,28 m² pro Gramm aufweist.

3. Eine Zusammensetzung nach Anspruch 1 oder 2, worin der genannte grobe, aus Feststoffen bestehende hydraulische Zement aus einem Portlandzement der API-Klasse G oder einem gleichwertigen besteht.

4. Eine Zusammensetzung nach Anspruch 1, 2, oder 3, worin der genannte Schlackezement in der genannten ultrafeinen Zementmischung eine Partikelgröße von nicht mehr als 30 Mikron, und eine Mittelpartikelgröße von 6 Mikron, und einen spezifischen Oberflächenbereich von nicht weniger als 0.6 m² pro Gramm aufweist.

5. Eine Zusammensetzung nach einem der Ansprüche 1 bis 4, worin der genannte Portland- oder gleichwertige Zement in der genannten ultrafeinen Zementmischung eine Partikelgröße von nicht mehr als 30 Mikron, eine Mittelpartikelgröße von 6 Mikron, und einen spezifischen Oberflächenbereich von nicht weniger als 0,6 m² pro Gramm aufweist.

6. Eine Zusammensetzung nach einem der Ansprüche 1 bis 5, worin der genannte Schlackezement in der genannten ultrafeinen Zementmischung in einer Menge von wenigstens 50% Massenanteil der genannten Mischung vorhanden ist.

7. Eine Zusammensetzung nach einem der Ansprüche 1 bis 6, worin die genannte Flugasche aus einer Flugasche der ASTM-Klasse F besteht.

8. Eine Zusammensetzung nach einem der Ansprüche 1 bis 7, worin die genannten hohlen Glaskugeln in einer Menge innerhalb eines Bereichs von 21 % bis 310% Massenanteil des genannten groben, aus Feststoffen bestehenden hydraulischen Zements vorhanden sind.

9. Eine Zusammensetzung nach einem der Ansprüche 1 bis 8, worin das genannte Wasser aus der Gruppe ausgewählt wird, welche aus frischem Wasser, gesättigten Salzlösungen, und ungesättigten Salzlösungen besteht.

10. Eine Zusammensetzung nach Anspruch 9, worin das genannte Wasser in einer Menge innerhalb eines Bereichs von 128% bis 400% Massenanteil des genannten groben, aus Feststoffen bestehenden hydraulischen Zements in der genannten Zusammensetzung vorhanden ist.

11. Eine Zusammensetzung nach einem der Ansprüche 1 bis 10, worin die genannte Zusammensetzung weiter ein Flüssigkeitsverlustkontrolladditiv umfasst.

12. Eine Zusammensetzung nach Anspruch 11, worin das genannte Flüssigkeitsverlustkontrolladditiv aus einer Mischung eines Propfpolymers besteht, welches eine Zentralverbindung aus Lignin, Lignit, oder Salzen derselben und einer gepfropften aufgehängten Gruppe von 2-Acrylamido-2-methylpropansulfonsäure und einem Copolymer oder Copolymersalz von N,N-dimethylacrylamid und 2-Acrylamido-2-methylpropansulfonsäure umfasst.

13. Eine Zusammensetzung nach Anspruch 11 oder 12, worin das genannte Flüssigkeitsverlustkontrolladditiv in einer Menge innerhalb eines Bereichs von 0,2% bis 8% Massenanteil des genannten groben, aus Feststoffen bestehenden hydraulischen Zements in der genannten Zusammensetzung vorhanden ist.

14. Eine Zusammensetzung nach einem der Ansprüche 1 bis 13, welche weiter einen Zementzusammensetzungsverfestigungsbeschleuniger umfasst.

15. Eine Zusammensetzung nach Anspruch 14, worin der genannte Zementzusammensetzungsverfestigungsbeschleuniger aus Kalziumchlorid besteht und in einer Menge innerhalb des Bereichs von 0,2% bis 12% Massenanteil des genannten groben, aus Feststoffen bestehenden hydraulischen Zements in der genannten Zusammensetzung vorhanden ist.

16. Eine Zusammensetzung nach einem der Ansprüche 1 bis 15, welche weiter ein Zementzusammensetzungsdispersionsmittel umfasst.

17. Eine Zusammensetzung nach Anspruch 16, worin das genannte Zementzusammensetzungsdispersionsmittel das Kondensationsprodukt von Aceton, Formaldehyd, und Natriumsulfit ist, und in einer Menge innerhalb des Bereichs von 0,2% bis 8% Massenanteil des genannten groben, aus Feststoffen bestehenden hydraulischen Zements in der genannten Zusammensetzung vorhanden ist.

18. Eine Zusammensetzung nach einem der Ansprüche 1 bis 17, welche weiter einen Zementzusammensetzungsverfestigungsstaustoff umfasst.

19. Eine Zusammensetzung nach Anspruch 18, worin der genannte Zementzusammensetzungsverfestigungsstaustoff aus der Gruppe ausgewählt wird, welche aus einem Copolymer von 2-Acrylamido-2-methylpropansulfonsäure und Acrylsäure, und einem Copolymer von 2-Acrylamido-2-methylpropansulfonsäure und Itaconsäure besteht, und in einer Menge innerhalb eines Bereichs von 0,2% bis 8% Massenanteil des genannten groben, aus Feststoffen bestehenden hydraulischen Zements in der genannten Zusammensetzung vorhanden ist.

20. Eine Zusammensetzung nach einem der Ansprüche 1 bis 19, welche weiter Silikapulver umfasst, um eine Retrogression der Zementverfestigungsstärke bei erhöhter Temperatur zu verhindern, welches in einer Menge innerhalb eines Bereichs von 20% bis 60% Massenanteil in dem genannten groben, auf Feststoffen bestehenden Zements in der genannten Zusammensetzung vorhanden ist.

21. Ein Verfahren für das Zementieren einer Untergrundzone, welche von einem Bohrloch penetriert wird, umfassend die folgenden Schritte: (a) das Vorbereiten einer leichten Zementzusammensetzung, umfassend einen groben, aus Feststoffen bestehenden hydraulischen Zement, eine ultrafeine, aus Feststoffen bestehende hydraulische Zementmischung aus Schlackezement und einem Portland- oder gleichwertigen Zement, Flugasche, abgerauchte Silika, hohle Glaskugeln, und ausreichend viel Wasser für das Formen eines Schlamms; (b) das Platzieren der genannten Zementzusammensetzung in der genannten Untergrundzone; und (c) das Verfestigen der genannten Zementzusammensetzung zu einer harten, undurchlässigen Masse.

22. Ein Verfahren nach Anspruch 21, worin der genannte grobe, aus Feststoffen bestehende hydraulische Zement eine Partikelgröße von nicht mehr als 118 Mikron, und einen spezifischen Oberflächenbereich von nicht weniger als 2800 Quadratzemtimeter pro Gramm aufweist.

23. Ein Verfahren nach Anspruch 21 oder 22, worin der genannte grobe, aus Feststoffen bestehende hydraulische Zement aus einem Portland- oder gleichwertigen Zement der API-Klasse G besteht.

24. Ein Verfahren nach Anspruch 21, 22, oder 23, worin der genannte Schlackezement in der genannten ultrafeinen Zementmischung eine Partikelgröße von nicht mehr als 30 Mikron, eine Mittelpartikelgröße von 6 Mikron, und einen spezifischen Oberflächenbereich von nicht weniger als 6000 Zentimetern pro Gramm aufweist.

25. Ein Verfahren nach einem der Ansprüche 21 bis 24, worin der genannte Portland- oder gleichwertige Zement in der genannten ultrafeinen Zementmischung eine Partikelgröße von nicht mehr als 30 Mikron, eine Mittelpartikelgröße von 6 Mikron, und einen spezifischen Oberflächenbereich von nicht mehr als 6000 Zentimetern pro Gramm aufweist.

26. Ein Verfahren nach einem der Ansprüche 21 bis 25, worin der genannte Schlackezement in der genannten ultrafeinen Zementmischung in einer Menge von wenigstens 50% Massenanteil der genannten Mischung in derselben genannten Mischung vorhanden ist.

27. Ein Verfahren nach einem der Ansprüche 21 bis 26, worin die genannte Flugasche aus einer Flugasche der ASTM-Klasse F besteht.

28. Ein Verfahren nach einem der Ansprüche 21 bis 27, worin die genannte ultrafeine Zementmischung aus Schlackezement und einem Portland- oder gleichwertigen Zement in einer Menge innerhalb eines Bereichs von 50% bis 150% Massenanteil des genannten groben, aus Feststoffen bestehenden hydraulischen Zement in der genannten Zementzusammensetzung vorhanden ist.

29. Ein Verfahren nach einem der Ansprüche 21 bis 28, worin die genannte Flugasche aus einer Flugasche der ASTM-Klasse F besteht.

30. Ein Verfahren nach einem der Ansprüche 21 bis 29, worin die genannte abgerauchte Silika in einer Menge innerhalb eines Bereichs von 20% bis 60% Massenanteil des darin enthaltenen groben, aus Feststoffen bestehenden hydraulischen Zements in der genannten Zusammensetzung vorhanden ist.

31. Ein Verfahren nach einem der Ansprüche 21 bis 30, worin die genannten hohlen Glaskugeln in einer Menge innerhalb eines Bereichs von 21% bis 310% Massenanteil des darin enthaltenen groben, aus Feststoffen bestehenden hydraulischen Zements in der genannten Zusammensetzung vorhanden sind.

32. Ein Verfahren nach einem der Ansprüche 21 bis 31, worin das genannte Wasser aus der Gruppe ausgewählt wird, welche aus frischem Wasser, gesättigten Salzlösungen, und ungesättigten Salzlösungen besteht

33. Ein Verfahren nach Anspruch 32, worin das genannte Wasser in einer Menge innerhalb eines Bereichs von 128% bis 400% Massenanteil des darin enthaltenen groben, aus Feststoffen bestehenden hydraulischen Zements in der genannten Zusammensetzung vorhanden ist.

34. Ein Verfahren nach einem der Ansprüche 21 bis 33, worin die genannte Zusammensetzung weiter ein Flüssigkeitsverlustkontrolladditiv umfasst.

35. Eine Zusammensetzung nach einem der Ansprüche 21 bis 34, worin das genannte Flüssigkeitsverlustkontrolladditiv aus einer Mischung eines Pfropfcopolymers besteht, welches eine Zentralverbindung aus Lignin, Lignit, oder Salzen derselben und einer gepfropften aufgehängten Gruppe von 2-Acrylamido-2-methylpropansulfonsäure und einem Copolymer oder Copolymersalz von N,N-dimethylacrylamid und 2-Acrylamido-2-methylpropansulfonsäure umfasst.

36. Eine Zusammensetzung nach Anspruch 34 oder 35, worin das genannte Flüssigkeitsverlustkontrolladditiv in einer Menge innerhalb eines Bereichs von 0,2% bis 8% Massenanteil des in der genannten Zusammensetzung enthaltenen groben, aus Feststoffen bestehenden hydraulischen Zements in derselben genannten Zusammensetzung vorhanden ist.

37. Ein Verfahren nach einem der Ansprüche 21 bis 36, worin die genannte Untergrundzone eine Temperatur innerhalb eines Bereichs von 45°F bis 100°F (7,22°C bis 37,8°C) aufweist, und worin die genannte Zementzusammensetzung weiter einen Zementzusammensetzungsverfestigungsbeschleuniger und ein Zementzusammensetzungsdispersionsmittel umfasst.

38. Ein Verfahren nach Anspruch 37, worin der genannte Zementzusammensetzungsverfestigungsbeschleuniger aus Kalziumchlorid besteht und in einer Menge innerhalb eines Bereichs von 0,2% bis 12% Massenanteil des darin enthaltenen genannten groben, aus Feststoffen bestehenden hydraulischen Zements in der genannten Zusammensetzung vorhanden ist.

39. Ein Verfahren nach Anspruch 37 oder 38, worin das genannte Zementzusammensetzungsdispersionsmittel aus dem Kondensationsprodukt aus Aceton, Formaldehyd, und Natriumsulfit besteht und in einer Menge innerhalb eines Bereichs von 0,2% bis 8% Massenanteil des darin enthaltenen groben, aus Feststoffen bestehenden hydraulischen Zements in der genannten Zusammensetzung vorhanden ist.

40. Ein Verfahren nach einem der Ansprüche 21 bis 36, worin die genannte Untergrundzone eine Temperatur innerhalb eines Bereichs von 100°F bis 230°F (37,8°C bis 110°C) aufweist, und die genannte Zementzusammensetzung weiter einen Zementzusammensetzungsverfestigungsbeschleuniger umfasst.

41. Ein Verfahren nach Anspruch 40, worin der genannte Zementzusammensetzungsverfestigungsbeschleuniger aus Kalziumchlorid besteht und in einer Menge innerhalb eines Bereichs von 0,2% bis 12% Massenanteil des genannten groben, aus Feststoffen bestehenden hydraulischen Zements in der genannten Zusammensetzung vorhanden ist.

42. Ein Verfahren nach einem der Ansprüche 21 bis 36, worin die genannte Untergrundzone eine Temperatur von 230°F bis 270°F (110°C bis 132°C) aufweist, und die genannte Zementzusammensetzung weiter einen Zementzusammensetzungsverfestigungsstaustoff und Silikapulver umfasst, um eine Retrogression der Zementverfestigungsstärke zu verhindern.

43. Ein Verfahren nach Anspruch 42, worin der genannte Zementzusammensetzungsverfestigungsstaustoff aus der Gruppe aus gewählt wird, welche aus einem Copolymer von 2-Acrylamido-2-Methylpropansulfonsäure und Acrylsäure, und einem Copolymer von 2-Acrylamido-2-methylpropansulfonsäure und Itaconsäure besteht, und in einer Menge innerhalb eines Bereichs von 0,2% bis 8% Massenanteil des darin enthaltenen groben, aus Feststoffen bestehenden hydraulischen Zements in der genannten Zusammensetzung vorhanden ist.

44. Ein Verfahren nach Anspruch 42 oder 43, worin das genannte Silikapulver in einer Menge innerhalb eines Bereichs von 20% bis 60% Massenanteil des darin enthaltenen groben, aus Feststoffen bestehenden hydraulischen Zements in der genannten Zusammensetzung vorhanden ist.

## Revendications

1. Composition de ciment de poids léger permettant de cimenter une zone souterraine pénétrée par un puits de forage comprenant : un ciment hydraulique particulaire grossier ; un mélange de ciment hydraulique particulaire ultrafin composé de ciment de laitier et d'un ciment de Portland ou ciment équivalent présent dans une quantité comprise entre 50 % et 150 % en poids dudit ciment hydraulique particulaire grossier dans ladite composition ; de la cendre volante présente dans une quantité comprise entre 50 % et 150 % en poids dudit ciment hydraulique particulaire grossier dans ladite composition ; de la silice fumée présente dans une quantité comprise entre 20 % et 60 % en poids dudit ciment hydraulique particulaire grossier dans ladite composition ; des sphères de verre creuse présents dans une quantité suffisante pour imprimer une densité à ladite composition dans la fourchette allant de 9 à 13 livres par gallon (1078 à 1558 kg/m³) ; et de l'eau présente dans une quantité suffisante pour constituer un laitier.

2. Composition selon la revendication 1, où ledit ciment hydraulique particulaire grossier possède une taille particulaire ne dépassant pas 118 microns et une surface spécifique supérieure ou égale à 0,28 m² par gramme.

3. Composition selon la revendication 1 ou 2, où ledit ciment hydraulique particulaire grossier est un ciment de Portland API de classe G ou ciment équivalent.

4. Composition selon la revendication 1, 2 ou 3, où ledit ciment de laitier dans ledit mélange de ciment ultrafin possède une taille particulaire ne dépassant pas 30 microns, une taille moyenne particulaire de 6 microns et une surface spécifique supérieure ou égale à 0,6 m² par gramme.

5. Composition selon l'une quelconque des revendications 1 à 4, où ledit ciment de Portland ou ciment équivalent dans ledit mélange de ciment ultrafin possède une taille particulaire ne dépassant pas 30 microns, une taille moyenne particulaire de 6 microns et une surface spécifique supérieure ou égale à 0,6 m² par gramme.

6. Composition selon l'une quelconque des revendications 1 à 5, où ledit ciment de laitier dans ledit mélange de ciment ultrafin est présent dans ledit mélange dans une quantité d'au moins 50 % en poids dudit mélange.

7. Composition selon l'une quelconque des revendications 1 à 6, où ladite cendre volante est de la cendre volante ASTM de classe F.

8. Composition selon l'une quelconque des revendications 1 à 7, où lesdites sphères de verre creuses sont présentes dans une quantité allant de 21 % à 310 % en poids dudit ciment hydraulique particulaire grossier dans ladite composition.

9. Composition selon l'une quelconque des revendications 1 à 8, où ladite eau est sélectionnée parmi le groupe consistant en eau fraîche, en solutions salines saturées et de solutions salines insaturées.

10. Composition selon la revendication 9, où ladite eau est présente dans une quantité comprise entre 128 % et 400 % en poids dudit ciment hydraulique particulaire grossier dans ladite composition.

11. Composition selon l'une quelconque des revendications 1 à 10, où ladite composition comprend en outre un additif de contrôle de perte de fluide.

12. Composition selon la revendication 11, où ledit additif de contrôle de perte de fluide est un mélange de copolymère greffe composé d'une ossature de lignine, de lignite ou de sels de ceux-ci et d'un groupe pendant greffé d'acide sulfonique 2-acrylamido-2-méthylpropane et d'un copolymère ou d'un sel de copolymère de N,N-diméthylacrylamide et d'acide sulfonique 2-acrylamido-2-méthylpropane.

13. Composition selon la revendication 11 ou 12, où ledit additif de contrôle de perte de fluide est présent dans une quantité comprise entre 0,2 % et 8 % en poids dudit ciment hydraulique particulaire grossier dans ladite composition.

14. Composition selon l'une quelconque des revendications 1 à 13, comprenant en outre un accélérateur de prise de composition de ciment.

15. Composition selon la revendication 14, où l'accélérateur de prise de composition de ciment se compose de chlorure de calcium et est présent dans une quantité comprise entre 0,2 % et 12 % en poids dudit ciment hydraulique particulaire grossier dans ladite composition.

16. Composition selon l'une quelconque des revendications 1 à 15, comprenant en outre un agent dispersif de composition de ciment.

17. Composition selon la revendication 16, où ledit agent dispersif de composition de ciment est le produit de condensation d'acétone, de formaldéhyde et de sulfite de sodium et est présent dans une quantité comprise entre 0,2 % et 8 % en poids dudit ciment hydraulique particulaire grossier dans ladite composition.

18. Composition selon l'une quelconque des revendications 1 à 17, comprenant en outre un retardateur de prise de composition de ciment.

19. Composition selon la revendication 18, où ledit retardateur de prise de composition de ciment est sélectionné parmi le groupe consistant en un copolymère d'acide sulfonique 2-acrylamido-2-méthylpropane et d'acide acrylique et d'un copolymère d'acide sulfonique 2-acrylamido-2-méthylpropane et d'acide itaconique et est présent dans une quantité comprise entre 0,2 % et 8 % en poids dudit ciment hydraulique particulaire grossier dans ladite composition.

20. Composition selon l'une quelconque des revendications 1 à 19, comprenant de la farine de silice pour empêcher toute régression de résistance de ciment une fois pris à des températures élevées présente dans une quantité comprise entre 20 % et 60 % en poids dudit ciment hydraulique particulaire grossier dans ladite composition.

21. Procédé de cimentation d'une zone souterraine pénétrée par un puits de forage comprenant les phases suivantes : (a) préparation d'une composition de ciment de poids léger consistant en un ciment hydraulique particulaire grossier, un mélange de ciment hydraulique particulaire ultrafin de ciment de laitier et d'un ciment de Portland ou équivalent, de cendre volante, de silice fumée, de sphères de verre creuses et de suffisamment d'eau pour constituer un laitier ; (b) placement de ladite composition de ciment dans ladite zone souterraine ; et (c) laisser prendre ladite composition de ciment pour se transformer en une masse imperméable dure.

22. Procédé selon la revendication 21, où ledit ciment hydraulique particulaire grossier a une taille particulaire ne dépassant pas 118 microns et une surface spécifique supérieure ou égale à 2800 centimètres carrées par gramme.

23. Procédé selon la revendication 21 ou 22, où ledit ciment hydraulique particulaire grossier est un ciment de Portland API de classe G ou ciment équivalent.

24. Procédé selon la revendication 21, 22 ou 23, où ledit ciment de laitier dans ledit mélange de ciment ultrafin possède une taille particulaire ne dépassant pas 30 microns, une taille moyenne particulaire de 6 microns et une surface spécifique supérieure ou égale à 6000 centimètres par gramme.

25. Procédé selon l'une quelconque des revendications 21 à 24, où ledit ciment de Portland ou ciment équivalent dans ledit mélange de ciment ultrafin possède une taille particulaire ne dépassant pas 30 microns, une taille moyenne particulaire de 6 microns et une surface spécifique supérieure ou égale à 6000 centimètres par gramme.

26. Procédé selon l'une quelconque des revendications 21 à 25, où ledit ciment de laitier dans ledit mélange de ciment ultrafin est présent dans ledit mélange dans une quantité d'au moins 50 % en poids dudit mélange.

27. Procédé selon l'une quelconque des revendications 21 à 26, où ladite cendre volante est de la cendre volante ASTM de classe F.

28. Procédé selon l'une quelconque des revendications 21 à 27, où ledit mélange de ciment hydraulique particulaire ultrafin composé de ciment de laitier et d'un ciment de Portland ou ciment équivalent est présent dans une quantité comprise entre 50 % et 150 % en poids dudit ciment hydraulique particulaire grossier dans ladite composition.

29. Procédé selon l'une quelconque des revendications 21 à 28, où ladite cendre volante est de la cendre volante ASTM de classe F.

30. Procédé selon l'une quelconque des revendications 21 à 29, où ladite silice fumée est présente dans une quantité comprise entre 20 % et 60 % en poids dudit ciment hydraulique particulaire grossier dans ladite composition.

31. Procédé selon l'une quelconque des revendications 21 à 30, où lesdites sphères de verre creuses sont présentes dans une quantité allant de 21 % à 310 % en poids dudit ciment hydraulique particulaire grossier dans ladite composition.

32. Procédé selon l'une quelconque des revendications 21 à 31, où ladite eau est sélectionnée parmi le groupe consistant en eau fraîche, en solutions salines saturées et de solutions salines insaturées.

33. Procédé selon la revendication 32, où ladite eau est présente dans une quantité comprise entre 128 % et 400 % en poids dudit ciment hydraulique particulaire grossier dans ladite composition.

34. Procédé selon l'une quelconque des revendications 21 à 33, où ladite composition comprend en outre un additif de contrôle de perte de fluide.

35. Procédé selon l'une quelconque des revendications 21 à 34, où ledit additif de contrôle de perte de fluide est un mélange de copolymère greffe composé d'une ossature de lignine, de lignite ou de sels de ceux-ci et d'un groupe pendant greffé d'acide sulfonique 2-acrylamido-2-méthylpropane et d'un copolymère ou d'un sel de copolymère de N,N-diméthylacrylamide et d'acide sulfonique 2-acrylamido-2-méthylpropane.

36. Procédé selon la revendication 34 ou 35, où ledit additif de contrôle de perte de fluide est présent dans une quantité comprise entre 0,2 % et 8 % en poids dudit ciment hydraulique particulaire grossier dans ladite composition.

37. Procédé selon l'une quelconque des revendications 21 à 36, où ladite zone souterraine a une température comprise entre 45°F et 100°F (7,22°C et 37,8°C) et ladite composition de ciment comprend en outre un accélérateur de prise de composition de ciment et un agent dispersif de composition de ciment.

38. Procédé selon la revendication 37, où ledit accélérateur de prise de composition de ciment se compose de chlorure de calcium et est présent dans une quantité comprise entre 0,2 % et 12 % en poids dudit ciment hydraulique particulaire grossier dans ladite composition.

39. Procédé selon la revendication 37 ou 38, où ledit agent dispersif de composition de ciment est le produit de condensation d'acétone, de formaldéhyde et de sulfite de sodium et est présent dans une quantité comprise entre 0,2 % et 8 % en poids dudit ciment hydraulique particulaire grossier dans ladite composition.

40. Procédé selon l'une quelconque des revendications 21 à 36, où ladite zone souterraine a une température comprise entre 100°F et 230°F (37,8°C et 110°C) et ladite composition de ciment comprend en outre un accélérateur de prise de composition de ciment.

41. Procédé selon la revendication 40, où ledit accélérateur de prise de composition de ciment se compose de chlorure de calcium et est présent dans une quantité comprise entre 0,2 % et 12 % en poids dudit ciment hydraulique particulaire grossier dans ladite composition.

42. Procédé selon l'une quelconque des revendications 21 à 36, où ladite zone souterraine a une température comprise entre 230°F et 270°F (110°C et 132°C) et ladite composition de ciment comprend en outre un retardateur de prise de composition de ciment et de la farine de silice pour empêcher toute régression de résistance de ciment une fois pris.

43. Procédé selon la revendication 42, où ledit retardateur de prise de composition de ciment est sélectionné parmi le groupe consistant en un copolymère d'acide sulfonique 2-acrylamido-2-méthylpropane et d'acide acrylique et d'un copolymère d'acide sulfonique 2-acrylamido-2-méthylpropane et d'acide itaconique et est présent dans une quantité comprise entre 0,2 % et 8 % en poids dudit ciment hydraulique particulaire grossier dans ladite composition.

44. Procédé selon la revendication 42 ou 43, où ladite farine de silice est présente dans une quantité comprise entre 20 % et 60 % en poids dudit ciment hydraulique particulaire grossier dans ladite composition.
